# DEMANDE DE BREVET EUROPEEN

(11) **EP 2 434 442 A1**
(43) Date de publication de la demande: **28.03.2012**
(21) Numéro de dépôt: 11181968.6
(22) Date de dépôt: 20.09.2011
(51) Int. Cl.: G06Q 10/00, G06N 3/00

(54) **Procédé d'enrichissement d'un monde virtuel d'un reseau social à partir d'elements échangés par des utilisateurs dans ledit reseau**

(30) Priorité: 27.09.2010 FR 1003822
(71) Demandeur: Alcatel Lucent, 75007 Paris (FR)
(72) Inventeur: Maag, Maria Coralia Laura, 91620 Nozay (FR); Hacid, Hakim, 91620 Nozay (FR)
(74) Mandataire: Mouney, Jérôme

(57) **Abrégé**

L'invention concerne un procédé d'enrichissement d'un monde virtuel d'un réseau social à partir d'éléments échangés par des utilisateurs (1) dans ledit réseau, ledit procédé prévoyant de :
- analyser le contenu desdits éléments échangés afin d'extraire des informations importantes qui sont partagées par lesdits utilisateurs ;
- modéliser des objets à partir desdites informations extraites ;
- proposer lesdits objets modélisés auxdits utilisateurs pour permettre leur intégration dans le monde virtuel partagé par lesdits utilisateurs.

## Description

L'invention concerne un procédé d'enrichissement d'un monde virtuel d'un réseau social à partir d'éléments échangés par des utilisateurs dans ledit réseau, une architecture d'un réseau social comprenant des moyens pour la mise en oeuvre d'un tel procédé, ainsi qu'un module d'analyse pour une telle architecture.

Les réseaux sociaux comme Facebook® sont aujourd'hui largement répandus, et permettent à leurs utilisateurs de rencontrer d'autres personnes. Dans la plupart des cas, les utilisateurs de tels réseaux se connectent avec des personnes qu'ils connaissent, par exemple parce qu'ils les ont déjà rencontrées dans le passé, comme c'est notamment le cas pour les utilisateurs du réseau social Copains d'Avant®, ou encore parce qu'elles leur ont été présentées par une autre personne familière desdits utilisateurs, par exemple un ami. En outre, les rencontres physiques ont un impact important sur les relations entretenues par les utilisateurs au sein d'un réseau social.

Les plateformes actuelles de réseaux sociaux permettent à des utilisateurs connectés ensemble de présenter leurs amis et de partager des souvenirs communs et/ou leurs projets d'avenir, par exemple au moyen de photos, de vidéos ou de messages textuels.

En outre, un utilisateur peut créer dans un réseau social un groupe relatif à un sujet donné, inviter d'autres utilisateurs dudit réseau concernés par ledit sujet et échanger avec lesdits autres utilisateurs au sein dudit groupe des photos et/ou des messages textuels décrivant des lieux ou des objets.

Cependant, les moyens de partage offerts par ces plateformes se limitent généralement à des systèmes de discussion et/ou de partage de fichiers, notamment de photos. En d'autres termes, ces moyens ne permettent que le partage de ressources externes et ne permettent pas aux utilisateurs de créer virtuellement au sein d'une telle plateforme des ressources à partager ultérieurement.

En outre, les applications de fourniture de mondes virtuels, dans lesquelles les utilisateurs peuvent construire et/ou personnaliser des objets, ou encore s'occuper d'un animal ou d'un bébé virtuel, sont aujourd'hui largement plébiscitées par le public. Par exemple, le monde virtuel YoVille®, lancé en mai 2008, a rencontré un franc succès, et son taux de fréquentation est plus important que n'importe quel autre monde virtuel, comme le souligne l'article disponible à l'adresse http://gigaom.com/2009/03/31/how-virtual-world-yoville-got-5m-facebook-users/.

Par conséquent, les réseaux sociaux, dans lesquels beaucoup d'informations sont partagées entre les utilisateurs, présentent un gros potentiel qui pourrait être exploité pour permettre auxdits utilisateurs de reconstruire virtuellement les objets et souvenirs qu'ils souhaitent partager à partir desdites informations. Par exemple, il pourrait être intéressant pour un groupe d'utilisateurs ayant fréquenté la même classe à l'école de pouvoir recréer virtuellement l'environnement de ladite classe à partir de leurs souvenirs.

L'invention vise à perfectionner l'art antérieur en proposant notamment un procédé permettant aux utilisateurs d'un réseau social de recréer de façon collaborative et automatique des objets et/ou des environnements qu'ils souhaitent partager au sein dudit réseau social.

A cet effet, selon un premier aspect, l'invention propose un procédé d'enrichissement d'un monde virtuel d'un réseau social à partir d'éléments échangés par des utilisateurs dans ledit réseau, ledit procédé prévoyant de :
- analyser le contenu desdits éléments échangés afin d'extraire des informations importantes qui sont partagées par lesdits utilisateurs;
- modéliser des objets à partir desdites informations extraites ;
- proposer lesdits objets modélisés auxdits utilisateurs pour permettre leur intégration dans le monde virtuel partagé par lesdits utilisateurs.

Selon un deuxième aspect, l'invention propose une architecture d'un réseau social auquel des utilisateurs sont connectés au moyen de leur terminal et dans lequel lesdits utilisateurs échangent des éléments, ladite architecture comprenant :
- un module de fourniture d'un monde virtuel auxdits utilisateurs;
- un module d'analyse comprenant au moins un moyen d'analyse du contenu desdits éléments échangés qui est apte à extraire des informations importantes qui sont partagées par lesdits utilisateurs ;
- un module de modélisation d'objets à partir desdites informations extraites ;
- une application qui comprend des moyens de proposition desdits objets modélisés auxdits utilisateurs pour permettre l'intégration desdits objets dans le monde virtuel partagé par lesdits utilisateurs.

Selon un troisième aspect, l'invention propose un module d'analyse pour une telle architecture, ledit module comprenant :
- des moyens d'analyse sémantique du contenu de messages textuels ;
- des moyens d'analyse du contenu de fichiers image et/ou vidéo ;
lesdits moyens étant aptes à extraire des informations importantes qui sont partagées par des utilisateurs dans le réseau social.

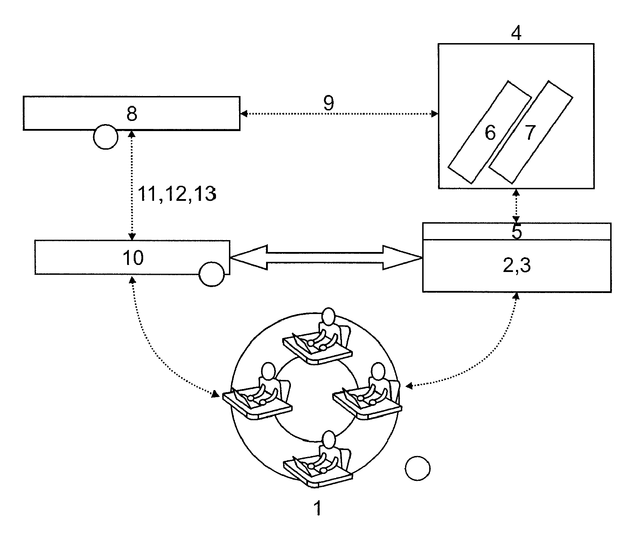

D'autres particularités et avantages de l'invention apparaîtront dans la description qui suit, faite en référence à la figure jointe représentant de façon schématique une architecture d'un réseau social selon un mode de réalisation de l'invention.

En relation avec cette figure, on décrit ci-dessous une architecture d'un réseau social auquel des utilisateurs 1 sont connectés au moyen de leur terminal et dans lequel lesdits utilisateurs échangent des éléments.

L'architecture comprend une application 2 de fourniture du réseau social qui comprend des moyens pour permettre aux utilisateurs 1 de créer un groupe avec d'autres utilisateurs qu'ils connaissent, par exemple des amis, des collègues de travail, ou encore des anciens camarades de classe, afin d'échanger des éléments au sein dudit groupe.

Les éléments échangés peuvent comprendre des messages textuels, comme des messages de discussion ou une description du groupe créé et des centres d'intérêts partagés par les utilisateurs 1 dudit groupe, mais aussi des fichiers image, par exemple des photos, ou des fichiers vidéo. En outre, l'application 2 comprend des moyens pour permettre aux utilisateurs 1 d'entrer de tels messages textuels et/ou de télécharger des fichiers image ou vidéo depuis leur terminal ou depuis un site internet, par exemple en activant des boutons et/ou des liens interactifs appropriés sur l'interface graphique utilisateur (GUI, pour Graphical User Interface) de l'application 2.

L'architecture comprend un module 3 de fourniture d'un monde virtuel aux utilisateurs 1 du réseau social. En relation avec la figure, le module 3 peut notamment être intégré à l'application 2 de fourniture du réseau social. En outre, le module 3 peut interagir avec l'application 2 afin de permettre l'affichage du monde virtuel fourni par le module 3 sur l'interface graphique de l'application 2.

Le procédé prévoit d'analyser le contenu des éléments échangés par des utilisateurs 1 dans le réseau social, notamment au sein d'un groupe dans ledit réseau, afin d'extraire des informations importantes qui sont partagées par lesdits utilisateurs. Pour ce faire, l'architecture comprend un module 4 d'analyse comprenant au moins un moyen d'analyse du contenu des éléments échangés qui est apte à extraire de telles informations.

En relation avec la figure, les moyens d'analyse du module 4 sont aptes à interagir avec l'interface de programmation 5 (API, pour Application Programming Interface) de l'application 2 de fourniture du réseau social afin d'extraire des informations importantes des éléments échangés par les utilisateurs 1 dans ledit réseau.

Selon une réalisation, le module 4 d'analyse comprend des moyens 6 d'analyse sémantique du contenu de messages textuels et/ou des moyens 7 d'analyse du contenu de fichiers image et/ou vidéo.

Ainsi, si les éléments échangés comprennent des messages textuels, des informations importantes sont extraites par analyse sémantique du contenu desdits messages, et si les éléments échangés comprennent des fichiers image ou vidéo, des informations importantes sont extraites par analyse du contenu desdits fichiers.

Le procédé prévoit ensuite de modéliser des objets à partir des informations extraites par les moyens 6, 7 du module 4. Pour ce faire, l'architecture comprend un module 8 de modélisation d'objets à partir de telles informations.

En relation avec la figure, le module 4 comprend des moyens pour envoyer une notification 9 au module 8, ladite notification comprenant les informations importantes extraites par les moyens 6, 7 du module 4.

Les objets modélisés peuvent être des objets virtuels et/ou des lieux correspondant aux informations extraites. En effet, les utilisateurs 1 d'un groupe échangent souvent des éléments relatifs à un lieu qu'ils ont fréquenté, comme la classe d'une école ou les locaux d'une entreprise, un lieu lié à un événement particulier, ou encore un lieu lié à leurs projets d'avenir, comme la maison qu'ils souhaitent acheter et/ou aménager. En outre, les éléments échangés contiennent souvent des informations de description de ces lieux et des objets éventuellement présents dans lesdits lieux.

En outre, le module 8 peut comprendre, pour chaque type d'information extraite, un moyen de modélisation d'objets adapté, ledit type dépendant du type de l'élément dont ladite information est extraite.

Par exemple, si une information extraite provient d'un message textuel, le module 8 peut comprendre des moyens adaptés pour modéliser un objet à partir de ladite information, tels les moyens employés par l'application POV-Ray® pour modéliser des objets en trois dimensions à partir de scripts de description de scènes. Pour ce faire, le module 8 peut en outre comprendre des moyens de transcription d'informations extraites d'un message textuel en un langage de description de scène (pour Scene Description Language) adapté.

De même, si une information extraite provient d'un fichier image, par exemple une photo, ou d'un fichier vidéo, le module 8 peut comprendre des moyens tels que ceux employés par l'application 3DSOM Pro® pour modéliser des objets en trois dimensions à partir de photos.

Le procédé prévoit de proposer les objets modélisés aux utilisateurs 1 pour permettre leur intégration dans le monde virtuel partagé par lesdits utilisateurs. Pour ce faire, l'architecture comprend une application 10 qui comprend des moyens de proposition des objets modélisés aux utilisateurs 1.

En relation avec la figure, le module 8 envoie une notification 11 comprenant les objets modélisés à l'application 10 qui comprend des moyens pour interagir avec l'application 2 de fourniture du réseau social et avec le module 3 de fourniture d'un monde virtuel pour ledit réseau, de sorte à permettre l'affichage sur l'interface graphique de l'application 2 du monde virtuel partagé par les utilisateurs 1 et des objets modélisés intégrés ou à intégrer dans ledit monde virtuel partagé.

Le procédé peut prévoir de stocker les objets modélisés dans une bibliothèque commune aux utilisateurs 1 afin de les proposer auxdits utilisateurs en vue de leur intégration dans le monde virtuel partagé par lesdits utilisateurs. Pour ce faire, l'architecture comprend une telle bibliothèque dans laquelle les objets modélisés sont stockés par l'application 10.

Ainsi, les utilisateurs 1 peuvent accéder aux objets modélisés afin de créer de façon collaborative un monde virtuel personnalisé. Ils peuvent par exemple recréer leur ancienne salle de classe, leur ancien lieu de travail et/ou leur prochain bien immobilier.

Selon une réalisation, les objets modélisés peuvent être modifiables par au moins un des utilisateurs 1 préalablement à leur intégration dans le monde virtuel partagé par lesdits utilisateurs. Pour ce faire, l'application 10 peut comprendre des moyens tels que ceux utilisés par l'application SecondLife® de fourniture d'un monde virtuel ou par l'application Sweet Home 3D® d'aménagement d'intérieur pour permettre aux utilisateurs 1 de modifier manuellement un objet modélisé qui leur est proposé, lesdits moyens étant par exemple aptes à afficher des boutons et/ou des liens interactifs sur l'interface graphique de l'application 10.

En outre, selon une réalisation, un utilisateur 1 souhaitant démarrer une conversation avec par exemple un autre utilisateur 1 du même groupe peut choisir un lieu modélisé dans le monde virtuel partagé, par exemple une salle, et modifier manuellement des objets insérés dans ledit lieu et/ou des paramètres dudit lieu, comme par exemple l'éclairage ou les prises de vue.

Une fois qu'un objet modélisé a été accepté par au moins un utilisateur 1, l'application 10 interagit avec l'application 2 et le module 3, afin d'insérer ledit objet dans le monde virtuel partagé. Ainsi, les utilisateurs 1 d'un même groupe peuvent évoluer dans un monde virtuel personnalisé. De plus, le module 3 peut comprendre des moyens aptes à animer les objets insérés dans le monde virtuel, comme on peut le voir par exemple dans un monde virtuel tel que YoVille®, de sorte à améliorer l'immersion des utilisateurs 1 dans ledit monde virtuel.

En outre, les objets modélisés peuvent correspondre à un objet du monde virtuel qui est modifié à partir des informations extraites.

En particulier, l'application 10 peut comprendre une bibliothèque d'objets modélisés standards comprenant notamment les objets et/ou les lieux les plus communs. En outre, lorsque le module 4 extrait des informations importantes d'éléments partagés par les utilisateurs 1, le module 8 peut, après avoir reçu une notification 9 comprenant lesdites informations, envoyer une requête 12 à l'application 10, afin que l'application 10 vérifie la présence dans sa bibliothèque d'objets standards correspondant auxdites informations et que, dans l'affirmative, l'application 10 envoie une notification 13 comprenant lesdits objets standards au module 8.

En outre, le module 4 peut être apte à analyser automatiquement et de façon continue les éléments échangés par des utilisateurs 1 au sein d'un groupe, de sorte à enrichir régulièrement le monde virtuel partagé par lesdits utilisateurs.

Ainsi, si des utilisateurs échangent de nouveaux éléments relatifs à un objet préalablement modélisé et inséré dans le monde virtuel partagé, ledit objet peut être analysé en tant qu'élément échangé par les moyens 7 d'analyse du contenu de fichiers image ou vidéo, et ce pendant que lesdits nouveaux éléments sont analysés par les moyens 6, 7 appropriés, le module 4 envoyant alors une notification 9 comprenant toutes les informations extraites au module 8 qui modélise un nouvel objet en fonction dudit objet préalablement modélisé et des informations extraites desdits nouveaux éléments échangés.

## Revendications

1. Procédé d'enrichissement d'un monde virtuel d'un réseau social à partir d'éléments échangés par des utilisateurs (1) dans ledit réseau, ledit procédé prévoyant de :
- analyser le contenu desdits éléments échangés afin d'extraire des informations importantes qui sont partagées par lesdits utilisateurs;
- modéliser des objets à partir desdites informations extraites ;
- proposer lesdits objets modélisés auxdits utilisateurs pour permettre leur intégration dans le monde virtuel partagé par lesdits utilisateurs.

2. Procédé d'enrichissement selon la revendication 1, **caractérisé en ce que** les éléments échangés comprennent des messages textuels, des informations importantes étant extraites par analyse sémantique desdits messages.

3. Procédé d'enrichissement selon la revendication 1 ou 2, **caractérisé en ce que** les éléments échangés comprennent des fichiers image ou vidéo, des informations importantes étant extraites par analyse desdits fichiers.

4. Procédé d'enrichissement selon l'une quelconque des revendications 1 à 3, **caractérisé en ce que** les objets modélisés sont des objets virtuels et/ou des lieux correspondant aux informations extraites.

5. Procédé d'enrichissement selon l'une quelconque des revendications 1 à 4, **caractérisé en ce qu'**il prévoit de stocker les objets modélisés dans une bibliothèque commune aux utilisateurs (1) afin de les proposer auxdits utilisateurs en vue de leur intégration dans le monde virtuel partagé par lesdits utilisateurs.

6. Procédé d'enrichissement selon l'une quelconque des revendications 1 à 5, **caractérisé en ce que** les objets modélisés sont modifiables par au moins un des utilisateurs (1) préalablement à leur intégration dans le monde virtuel partagé par lesdits utilisateurs.

7. Procédé d'enrichissement selon l'une quelconque des revendications 1 à 6, **caractérisé en ce que** les objets modélisés correspondent à un objet du monde virtuel qui est modifié à partir des informations extraites.

8. Architecture d'un réseau social auquel des utilisateurs (1) sont connectés au moyen de leur terminal et dans lequel lesdits utilisateurs échangent des éléments, ladite architecture comprenant :
- une application (2) de fourniture dudit réseau social qui comprend un module (3) de fourniture d'un monde virtuel auxdits utilisateurs ;
- un module (4) d'analyse comprenant au moins un moyen (6, 7) d'analyse du contenu desdits éléments échangés qui est apte à extraire des informations importantes qui sont partagées par lesdits utilisateurs ;
- un module (8) de modélisation d'objets à partir desdites informations extraites ;
- une application (10) qui comprend des moyens de proposition desdits objets modélisés auxdits utilisateurs pour permettre l'intégration desdits objets dans le monde virtuel partagé par lesdits utilisateurs.

9. Architecture d'un réseau social selon la revendication 8, **caractérisée en ce que** le module (4) d'analyse comprend des moyens (6) d'analyse sémantique du contenu de messages textuels et/ou des moyens (7) d'analyse du contenu de fichiers image et/ou vidéo.

10. Architecture d'un réseau social selon la revendication 8 ou 9, **caractérisée en ce qu'**elle comprend une bibliothèque commune aux utilisateurs (1) dans laquelle les objets modélisés sont stockés par l'application (10).

11. Module (4) d'analyse pour une architecture d'un réseau social selon l'une quelconque des revendications 8 à 10, ledit module comprenant :
- des moyens (6) d'analyse sémantique du contenu de messages textuels ;
- des moyens (7) d'analyse du contenu de fichiers image et/ou vidéo;
lesdits moyens étant aptes à extraire des informations importantes qui sont partagées par des utilisateurs (1) dans le réseau social.
